# EUROPÄISCHE PATENTSCHRIFT

(11) **EP 0 782 503 B1**
(45) Veröffentlichungstag und Bekanntmachung des Hinweises auf die Patenterteilung: **29.12.1999**
(21) Anmeldenummer: 95934079.5
(22) Anmeldetag: 20.09.1995
(51) Int. Cl.: B31F 1/07, D21H 27/30, B32B 29/00, B32B 31/16

(54) **MEHRLAGIGES BAHNFÖRMIGES TISSUEPRODUKT UND SEINE HERSTELLUNG**
MULTI-PLY WEB-LIKE TISSUE PRODUCT AND PRODUCTION THEREOF
PRODUIT EN PAPIER TISSU MULTICOUCHE EN FORME DE BANDE ET SA FABRICATION

(30) Priorität: 21.09.1994 AT 30994
(43) Veröffentlichungstag der Anmeldung: 09.07.1997
(73) Patentinhaber: SCA Hygiene Products GmbH, 68305 Mannheim (DE)
(72) Erfinder: KLEMMER, Hermann, A-2763 Neusiedl (AT); HEILEMANN, Thomas, D-67227 Frankenthal (DE)
(74) Vertreter: Sieckmann, Ralf, Dr.
(86) Internationale Anmeldenummer: EP9503699
(87) Internationale Veröffentlichungsnummer: WO9609162

(56) Entgegenhaltungen:
- EP-A- 0 436 170
- EP-A- 0 476 976
- EP-A- 0 674 990
- WO-A-94/12343
- DE-A- 3 700 649
- US-A- 1 929 924
- US-A- 2 729 267
- US-A- 3 867 872
- US-A- 3 953 638
- US-A- 4 481 243

## Beschreibung

Die Erfindung bezieht sich auf ein mehrlagiges bahnförmiges Tissueprodukt gemäß Oberbegriff von Anspruch 1. Unter Tissueprodukt im Sinne der vorliegenden Erfindung versteht man Taschentücher, Kosmetiktücher, Abschminktücher, Servietten, Toilettenpapier, Handtücher und Küchentücher.

Die DE-A-37 00 649 betrifft ein Verfahren zur Herstellung von mehrlagigen Tropfdeckchen aus Papier, insbesondere einem Tissuematerial, wobei mehrere übereinander liegende Papierbahnen bereichsweise miteinander verpreßt und dann aus der damit gebildeten Verbundbahn einzelne Tropfdeckchen ausgestanzt werden, welches dadurch gekennzeichnet ist, daß die übereinanderliegenden Papierbahnen zunächst durch Prägekalander bis in den Randbereich der später auszustanzenden Tropfdeckchen miteinander verpreßt werden, einschließlich der nicht verpreßte Mittelbereich der später auszustanzenden Tropfdeckchen bedruckt und dann die Verbundbahn in einzelne Bogen aufgeteilt wird, aus welchen dann Stapel gebildet und dann aus den jeweiligen Stapeln die Tropfdeckchen ausgestanzt werden. Diesem Stand der Technik liegt die Aufgabe zugrunde, ein Verfahren aufzuzeigen, mittels dessen eine höhere Arbeitsleistung bei der Erstellung von Tropfdeckchen erzielt werden kann, einem Arbeitsvorgang, welcher zwingend das Ausstanzen von runden Tissuematerialien vorsieht. Im Gegensatz dazu ist Gegenstand der vorliegenden Erfindung, bei einer Verbindungsprägung nur längs der Papierbahn kontinuierlich, nicht aber - durch die Tropfdeckchenherstellung bedingt - durch einen Prägekalander diskontinuierlich eine Prägung über die Länge und Breite vorzusehen. Weiterhin ist für den Fachmann auch nicht nahegelegt, die einzelnen Tissuepapierbahnen ebenfalls vorher einer Prägung zu unterziehen, die vorzugsweise der Prägung entspricht, die als Verbindungsprägung vorgesehen ist.

Die EP-A-476976 betrifft ein Rand-Prägeverfahren für Falzprodukte, welches eine optische auffällige Randprägung und gleichzeitig eine entsprechende Lagenhaftung erzeugt. Im Gegensatz hierzu zielt das erfindungsgemäße Verfahren auf die Erzeugung einer Rändelnaht für Rollenprodukte. Bei der Rand-PrägungsLagenverhaftungsstation der EP-A-476976 handelt es sich um ein geätztes Walzenpaar, bei der die Gegenwalze nicht, wie bei der vorliegenden Erfindung, in glatter Form ausgeführt ist, sondern in die die Negativform der gewünschten Noppen eingraviert ist

Die EP-A-436170 betrifft ein geprägtes, mehrlagiges Haushalts- oder Hygienepapier, bei dem wenigstens ein Teil seiner Lagen ein- oder mehrlagig unabhängig voneinander geprägt sind und diese Lagen durch konventionelle Rändelung derart in bündiger Anlage miteinander verbunden sind, daß die Außenseiten der äußeren Lagen glatt sind. Die Lagenverhaftung bei diesem Verfahren gelingt nur unter zwingender Verwendung einer Entladestation. Ausgehend von der Lehre der vorgenannten europäischen Patentanmeldung gelangt der Fachmann nicht zum Gegenstand der vorliegenden Erfindung, wie beansprucht. Der Einsatz konventioneller Rändelung dient im Gegensatz zur vorliegenden Erfindung nur zur Lagenverhaftung ohne Rücksicht auf deren optische Auffälligkeit.

Die US-A-1929924 betrifft ein Papiererzeugnis (Falzprodukt), bei dem, gemäß Zeichnungen, die verschiedenen Papierbahnlagen 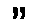 abschnittsweise" durch eine Randprägung versehen werden, mit dem Ziel, die Lagen untereinander zu verhaften, so daß die Abschnittslänge beim Schneidevorgang konstant gehalten werden kann. Dies wirkt sich auch auf die Druckbildregisterhaltigkeit aus. Jeder Abschnitt entspricht einem 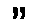 Produkt-Nutzen", der im Falle der sogenannten 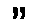 Falzprodukte" endfertig vereinzelt das mehrlagige Tissueprodukt darstellt, das, wie dort beschrieben, üblicherweise mit einem in sich geschlossenen, umlaufenden Prägerand versehen ist.

Die US-A-2729267 zeigt in den Abbildungen 2 und 4 sowie der Figurenbeschreibung ein Rand-Pägeverfahren für mehrschichtige Falz-Papiererzeugnisse, bei denen die Ränder von mehrlagigen Tissuepapieren verprägt werden, um einerseits die Registerhaltigkeit der Abschnittslängen bei der nachfolgenden Schneidestation zu gewährleisten sowie eine Großteil der Fläche des Tissueerzeugnisabschnittes mit einer glatten Oberfläche zu erhalten und daher nur schmale Zonen, d.h. die Ränder, zu verprägen.

Die US-A-4481243 betrifft ein reißfestes, weißes Absorptionstissueprodukt wie ein Facial, welches mehrlagig ausgebildet ist und eine Randprägung auf der rechten und linken Seite, vorzugsweise in Form von Rauten, aufweist. Zwingender Bestandteil dieses Facials ist außerdem das Vorhandensein eines Emollienz, welches als Lotion, Creme, Gel oder Feststoff aufgetragen wird und vorzugsweise aus einem Wachs, welches in Mineralöl gelöst/dispergiert ist, besteht. Die Aufgabe dieses Standes der Technik liegt darin, ein laminiertes Tissuepapier bereitzustellen, welches weniger Irritationen und Entzündungen an der Nase und den Gesichtsbereichen verursacht, die sich um die Nase herum befinden, als solche Produkte, die Stand der Technik sind. Von der vorliegenden Erfindung unterscheidet sich dieses Dokument also nicht nur schon hinsichtlich der Aufgabe, sondern auch dadurch, daß zwingend einerseits gefordert wird, ein Emollienz oder weichmachendes Mittel auf nahezu alle Bereiche des Facials, ausgenommen die Randprägungen auf der rechten und linken Seite aufzugeben. Weiterhin wird hierdurch für den Fachmann auch nicht nahegelegt, wenigstens einen Teil der Bahnen des Tissuepapiererzeugnisses bereits selbstgeprägt in das Tissuepapierprodukt einzubringen und die Prägungen so zu gestalten, daß die ersten Prägungen weitgehend mit der Verbindungsprägung übereinstimmen.

Bei Tissueprodukten steht in der Regel die Forderung nach Weichheit und Flauschigkeit im Vordergrund, wobei außerdem auch eine gewisse Reißfestigkeit vorliegen soll. Ein Weg diesen Forderungen zu entsprechen ist das Zusammenheften mehrerer Lagen zu einer Bahn. Dem Wunsch nach Flauschigkeit kann durch Zusammenheften mehrerer je für sich mit einem Prägemuster versehener Lagen sehr gut entsprochen werden, wobei durch das Zusammenheften mehrerer Lagen auch eine entsprechende Erhöhung der Festigkeit erzielt werden kann. Die gewünschte Weichheit wird durch eine entsprechend weiche Struktur des für die einzelnen Lagen verwendeten Basispapiers erreicht; mit einer derartigen weichen Struktur des Basispapiers geht auch eine gewisse Nachgiebigkeit gegenüber der Einwirkung mechanischer Kräfte einher.

Bei bekannten mehrlagigen bahnförmigen Tissueprodukten eingangs erwähnter Art ist die Verbindungsprägung, mit der die bereits je für sich mit einem Prägemuster versehenen oder glatten Lagen zusammengeheftet sind, durch zwei verhältnismäßig schmale streifenförmige Prägungen gebildet, welche beiderseits längs der Ränder der Bahn im Abstand von diesen Rändern verlaufen, und es ist dabei das Prägemuster dieser streifenförmigen Prägungen in Art einer Rändelung ausgebildet, wobei die Erhebungen und Vertiefungen dieses Rändelmusters viel feiner, d.h. von viel kleineren Abmessungen, als bei einem Prägemuster, welches an den einzelnen Lagen vorgesehen worden ist, sind. Bei einer solchen Zusammenheftung mehrerer Papierlagen zu einem mehrlagigen Tissueprodukt können sich nun durch die weiche Struktur der hierfür vorgesehenen Papiere und durch Ungleichmäßigkeiten der die einzelnen Lagen bildenden Papiere hinsichtlich Dicke und Nachgiebigkeit leicht Laufungenauigkeiten ergeben, welche zu Verschiebungen der Position der erwähnten streifenförmigen Prägemuster in bezug auf die Ränder der herzustellenden mehrlagigen Tissueproduktbahnen führen; dies insbesondere, wenn hohe Laufgeschwindigkeiten bei der Verarbeitung der Papiere angewendet werden; solche Verschiebungen können das Aussehen beeinträchtigen und auch Veränderungen hinsichtlich der Festigkeit des Aneinanderhaftens der Lagen der Tissueproduktbahn zur Folge haben.

Es ist ein Ziel der vorliegenden Erfindung, ein mehrlagiges d.h. zwei- oder mehrlagiges bahnförmiges Tissueprodukt eingangs erwähnter Art zu schaffen, bei dem Nachteile, wie sie bei bekannten Tissueproduktbahnen bekannter Art auftreten können und wie sie vorstehend erwähnt sind, behoben sind. Dieses Ziel wird durch den kennzeichnenden Teil von Anspruch 1 gelöst.

Die Erfindung betrifft somit ein mehrlagiges bahnförmiges Tissueprodukt aus wenigstens 2 Lagen, dessen Lagen miteinander durch eine allen Lagen gemeinsame Verbindungsprägung zusammengehalten sind, wobei die einzelnen Lagen mit einem im wesentlichen über die ganze Fläche verlaufenden Prägemuster versehen sind oder gegebenenfalls glatt sind, und wenigstens die Außenlagen ein Lagen-Prägemuster aufweisen, wobei die Lagen gleiche oder unterschiedliche Tissuequalität aufweisen, wobei die Verbindungsprägung in Form von beiderseits unmittelbar an die Ränder (2, 3) der mehrlagigen Bahn (1) anschließenden, einen Teil der Bahnbreite (6) einnehmenden Prägestreifen (4, 5) ausgeführt ist, dadurch gekennzeichnet, daß das Prägemuster der Verbindungsprägung, welche die Lagen zusammenheftet, und das bzw. die Prägemuster der einzelnen Lagen des Papiers durch Noppen (7) gebildet sind, welche in einem annähernd rechteckigen oder parallelogrammförmigen Raster angeordnet sind, dessen Zeilen (9) und Spalten (8) annähernd gleich schräg zu den Rändern (2, 3) der Bahn (1) ausgerichtet sind und wobei sämtliche Lagen des Tissueproduktes mit einem dem Lagen-Prägemuster wenigstens einer der Außenlagen gleichen oder visuell ähnlichen Verbindungsprägemuster zusammengeheftet sind.

Durch diese Ausbildung kann der vorstehend angeführten Zielsetzung gut entsprochen werden. Es treten mäßige Abweichungen der Lage jener Schnitte, mit denen die meist mehrere Meter breiten Papierbahnen in vergleichsweise dazu schmale Bahnen, deren Abmessungen dem jeweiligen Verwendungszweck des betreffenden Tissueprodukts angepaßt sind, unterteilt werden, gegenüber dem Verlauf der die Lagen vereinenden Verbindungsprägung optisch nicht mehr nachteilig in Erscheinung. Die Verbindungsprägungen reichen beiderseits bis an den Rand der verbrauchsgerecht geschnittenen Papierbahnen und dies ist für den Zusammenhalt der Lagen günstig.

Der vorgenannte Zusammenhalt der Lagen über eine Breiträndelung zeigt folgende Vorteile gegenüber dem Stand der Technik:
- Es kommt zu keiner sichtbaren Rädelnaht, es erfolgt weder eine Wulstbildung noch ist eine sonstige Naht sichtbar,
- Die Breiträndelung ist gegenüber einer normalen Rändelung technisch weniger aufwendig, die Flächenpressung ist geringer, es wird kein Wulst gebildet,
- Durch genaue Einstellung des Prägedesign kann die Breiträndelnaht in der 1. Prägung angeordnet sein, so daß die Verbindungsprägung nicht sichtbar wird.

Setzt man die Breiträndelung zusammen mit der nachstehend beschriebenen Feinrändelung durch Vertiefungen auf der Rändelnoppe ein, so ergeben sich als weitere Vorteile
- weitere Erhöhung der Lagenhaftung,
- Hier kommt es noch weniger zu einer Wulstbildung,
- noch geringere Probleme der Positionierung der Rändelnaht auf der Tissuebahn,
- noch geringere Probleme beim Sägeschnitt zu Einzelröllchen,
- marginale Verschiebungen der Schnittposition subjektiv nicht bemerkbar,
- Steigerung der Produktionsrate durch weniger Ausschuß.

Vorteilhaft sieht man bei einem erfindungsgemäß ausgebildeten Tissueprodukt, welches aus mehreren geprägten Lagen zusammengefügt ist, vor, daß mehrere zuvor geprägte Lagen mit einem dem Lagen-Prägemuster gleichen oder visuell ähnlichen Verbindungsprägemuster zusammengeheftet sind. Es wird so ein gutes Aussehen erzielt. Dadurch, daß die Verbindungsprägung mit einem gleichen oder visuell ähnlichen Prägemuster ausgeführt wird, wie die zuvor an den einzelnen Lagen gebildete Prägung, kann die Verbindungsprägung auch verhältnismäßig breit ausgeführt werden, ohne daß diese optisch nachteilig in Erscheinung tritt. Man kann dabei vorteilhaft vorsehen, daß die Breite der beiden unmittelbar an die Ränder der mehrlagigen Bahn anschließenden Prägestreifen der Verbindungsprägung zusammengenommen 10 mm bis 80 mm, bevorzugt 20 mm bis 60 mm beträgt. Dies ergibt auch bei Laufungenauigkeiten der mit der Verbindungsprägung zusammengefügten mehrlagigen Papierbahn einen guten Zusammenhalt.

Eine in den vorgenannten Eigenschaften und auch hinsichtlich eines gleichmäßigen Ablaufes des Vorganges bei der Bildung der Verbindungsprägung besonders vorteilhafte Ausführungsform eines erfindungsgemäß ausgebildeten bahnförmigen Tissueprodukts, welches aus mehreren, zuvor geprägten Lagen zusammengefügt ist, ist dadurch gekennzeichnet, daß das Prägemuster der Verbindungsprägung, welche die Lagen zusammenheftet und das bzw. die Prägemuster der einzelnen Lagen des Papiers durch Noppen gebildet sind, welche in einem annähernd quadratischen oder rhombischen Raster angeordnet sind, dessen Zeilen und Spalten annähernd gleich schräg zu den Rändern der Bahn ausgerichtet sind. Es ist dabei weiter sowohl hinsichtlich des optischen Erscheinungsbildes wie auch hinsichtlich des erzielten Zusammenhaltes der einzelnen Lagen der Papierbahn und weiter auch hinsichtlich eines gleichförmigen Ablaufes des Prägevorganges günstig, wenn man bei letzterer Ausführungsform vorsieht, daß die Noppen an der Papierbahn eine Kantenlänge oder einen Durchmesser von weniger als 2 mm, vorzugsweise weniger als 1,5 mm haben. Erfindungsgemäß wird die Prägenoppengröße ähnlich der Prägenoppengröße der vorhergehenden Prägung gewählt, wobei üblicherweise eine Prägenoppenkantenlänge von 0,4 mm bis zu 20 mm, vorzugsweise 0,7 mm bis 1,6 mm eingestellt wird. Die Noppen selbst können unregelmäßig in Form eines Musters ausgestaltet sein wie auch eine regelmäßige Form zeigen, also n-eckig, rautenförmig, rhombusformig, viereckig usw.

Das erfindungsgemäße mehrlagige bahnförmige Tissueprodukt weist in den Außenlagen die gleiche oder eine unterschiedliche Tissuequalität auf wie die Innenlage(n). Unter Tissuequalität eine Tissuepapierlage im Sinne der vorliegenden Erfindung versteht man eine solche Qualität, die ausgewählt ist aus der Gruppe von Tissuequalitäten erhalten nach dem TAD-Verfahren, nach dem Schichtungsverfahren, dem Einsatz von Zellstoff in Form von Trockenstoff oder Pumpstoff, Altpapier, Sulfat- oder Sulfit-Zellstoff oder nach einer Kombination der vorgenannten Verfahren. Derartige Qualitäten in den erfindungsgemäßen mehrlagigen bahnförmigens Tissueprodukten sind Tissuepapierlagen, die ausgewählt ist aus Qualitäten mit unterschiedlichen Flächengewichten im Bereich von 12 bis 40 g/m², bevorzugt 14 bis 23 g/m², insbesondere mit solchen im Bereich von 15 bis 21 g/m².

Nach einer anderen bevorzugten Ausführungsform der vorliegenden Erfindung soll im erfindungsgemäßen mehrlagigen bahnförmigen Tissueprodukt die Tissuequalität wenigstens einer der Innenlagen eine größere, gleiche oder kleinere Festigkeit aufweisen als die entsprechende Tissuequalität der Außenlagen. Typische Festigkeiten für derartige Innenlagen liegen bei etwa 2 bis 30 N/50 mm, für die Aussenlagen dagegen nur bei etwa 2 bis 20 N/50 mm, für die Längs- und Querfestigkeit.

Nach einer weiteren bevorzugten Ausführungsform der vorliegenden Erfindung soll im erfindungsgemäßen mehrlagigen bahnförmigen Tissueprodukt wenigstens eine der Lagen, vorzugsweise der Innenlagen wenigstens 50 Gew.-%, vorzugsweise wenigstens 80 Gew.-%, insbesondere bis zu 100 Gew.-% Recycling-Papier oder Altpapier enthalten. Typische Flächengewichtsbereiche für diese Papierqualitäten sind 12 bis 40 g/m², bevorzugt 14 bis 23 g/m², insbesondere 15 bis 21 g/m².

Ganz besonders bevorzugt ist es allerdings, im Zusammenhang mit dem erfindungsgemäßen mehrlagigen bahnförmigen Tissueprodukt einen zusätzlichen Zusammenhalt über eine Verbindungsprägung durch wenigstens eine auf den Oberflächen des/der Rändelradnoppen vorhandene Vertiefung, die vorzugsweise rund oder eckig ausgestaltet ist, zu schaffen. In diesem Zusammenhang ist es bevorzugt, bei dem erfindungsgemäßene mehrlagigen bahnförmigen Tissueprodukt in der Weise vorzugehen, daß ein zusätzlicher Zusammenhalt der Lagen über eine auf wenigstens einen Teil der Bahn aufgebrachte Verleimung, vorzugsweise im Bereich der Breiträndelung, erfolgt.

Die Erfindung bezieht sich auch auf ein Verfahren zur Herstellung eines mehrlagigen bahnförmigen Tissueprodukts nach einem der vorhergehenden Ansprüche, wobei mehrere, z.B. zwei oder drei, mit einem Noppen-Prägemuster versehene Papierbahnen (18, 19, 20), deren Breite ein Mehrfaches der Breite der herzustellenden Papierbahn (1) beträgt, gemeinsam durch einen axial unterteilten Prägespalt geleitet werden, der zwischen mindestens drei, axial fluchtend im Abstand voneinander angeordneten stählernen Noppen-Prägewalzen (26) und einer oder mehreren diesen Noppen-Prägewalzen zugeordneten Gegenwalze(n) mit einer Oberfläche vorzugsweise aus Stahl, Gummi, Papier oder Kunststoff (27) gebildet ist, dadurch gekennzeichnet, daß die so gebildete mehrlagige Papierbahn nach dem im Prägespalt erfolgten Zusammenheften der Lagen durch Schnitte in mehrere schmälere Papierbahnen geteilt wird, welche Schnitte je annähernd in der Mitte der bei diesem Zusammenheften gebildeten streifenförmigen Prägemuster geführt werden, wobei das Teilen in mehrere schmälere Papierbahnen, welche die für die Verwendung des Tissueprodukts gewünschte Breite haben, nach einem auf das Zusammenheften erfolgten Aufrollen der durch den Prägespalt gelaufenen Papierbahn vorgenommen wird. Die dabei vorgesehene Art der Prägung, die zum Zusammenheften der Lagen vorgesehen ist, wirkt der Erkennbarkeit von seitlichen Abweichungen entgegen und läßt auf einfache Weise einen guten Zusammenhalt der Papierlagen erzielen.

Weiterhin liegt der vorliegenden Erfindung die Aufgabe zugrunde, eine Einrichtung zur Herstellung von Tissueprodukten der vorgenannten Art bereitzustellen, enthaltend Mittel zum Abwickeln von Papierbahnen (18, 19, 20) von Mutterrollen (21, 22, 23) und Führung der Papierbahnen, erste, wenigstens zwei Prägestationen (24a, 24c), die zur Lagenprägung der Außenlagen (18, 20) dienen, wobei mindestens eine der zwei Prägestationen eine Noppenwalze umfaßt, eine weitere Prägestation (25), die einen Prägespalt bildet, bei dem mehrere schmale Prägewalzen (26) einer Gegenwalze (27) zugeordnet sind, gegebenenfalls ein Glättwerk, gegebenenfalls ein Druckwerk sowie eine Aufrollstation (28), dadurch gekennzeichnet, daß die weitere Prägestation (25) eine Rändelstation enthält, bei der eine Rändelradwalze oder eine Vielzahl von Rändelrädern wenigstens einer Gegenwalze mit Stahloberfläche zugeordnet ist und daß die weitere Prägewalze (26) eine Noppenprägewalze aufweist, d. h. die Mittellage(n) (19) kann/können) ungeprägt bleiben, (muß/müssen) aber nicht.

Bevorzugt enthält eine derartige Einrichtung eine erste Prägestation 24 aus wenigstens einem Walzenpaar, bei der eine Walze mit Stahloberfläche einer Walze mit Gummioberfläche, einer Kunststoffoberfläche oder einer Papieroberfläche zugeordnet ist.

Das Glättwerk selbst ist so ausgestaltet, das die Papierbahn einmal durch den Spalt (mehrere Spalte hintereinander) eines Walzenpaars geführt wird, bei dem zuerst eine Walze mit einer Stahtoberfläche einer Gegenwalze mit einer Kunststoffoberfläche und dann spiegelbildlich eine Walze mit einer Kunststoffoberfläche einer Gegenwalze mit einer Stahloberfläche zugeordnet ist. Alternativ können auch Walzenpaare mit Stahl/Stahloberflächen oder Stahl/Gummioberflächen eingesetzt werden.

Das Druckwerk dient beispielsweise zum Aufbringen eines Musters, eines Schriftzugs Logos usw..

Im Sinne der vorliegenden Erfindung bevorzugt ist eine Einrichtung bei der die weitere Prägestation 25 eine Rändelstation ist, bei der eine Rändelradwalze oder eine Vielzahl von Ränderrädern wenigstens einer Gegenwalze mit Stahloberfläche, einer Gummioberfläche, einer Kunststoffoberfläche oder Papieroberfläche zugeordnet ist zugeordnet ist. In diesem Teil der Einrichtung weist die Rändelradwalze Rändeiräder auf, die eine Breiträndelung, d.h. eine Rändelung über 10 bis 80 mm erzeugen. Die vorgenannte Rändelstation wird in der Fachwelt auch als Lagenverhaftungsstation bezeichnet.

Besonders bevorzugt ist es in diesem Zusammenhang, daß dieser Teil der Einrichtung so ausgestaltet ist, daß die Noppen der Rändelräder auf wenigstens einem Teil ihrer Oberfläche Vertiefungen aufweisen. Diese Vertiefungen sind insbesondere so ausgestaltet, daß sie eine Vielzahl von Mehrecken oder Kreisen, vorzugsweise Rechtecken oder Parallelogrammen aufweisen.

Derartige Vertiefungen sind so gehalten daß sie insbesondere in Form von feinen Kerben in der Rändelnoppenoberfläche vorliegen. Gegenüber den vorstehend beschriebenen Rändelnoppen mit glatter Oberfläche haben die Rändelnoppen mit Vertiefung für den Fachmann überraschenderweise den Vorteil einer signifikant größeren Lagenverhaftung, wobei in den Rillen die zu verbindenden Papierbahnen durch die vielen Kanten und Kerben bei der Verpressung der verschiedenen Papierlagen ein wesentlich höherer Faserverbund erzielt werden kann.

Typische Geometrien für auf den Rändelnoppen vorhandene Vertiefungen sind sowohl nur schmale Vertiefungen, aber auch eine Kombination von schmalen mit breiteren Vertiefungen, wobei aber die durch die Vertiefungen verkleinerte glatte Oberfläche der Prägenoppen möglichst gering gehalten werden sollte. Eine gute zusätzliche Lagenverhaftung kann durch eine Ausführung mit schmalen Vertiefungen, vorzugsweise kreuzweise angeordneten Vertiefungen erreicht werden. Diese Vertiefungen sollten weniger als 50 %, vorzugsweise weniger als 30 % der nicht vertieften Oberfläche ausmachen.

Die Erfindung wird nun unter Bezugnahme auf Figuren, welche in der Zeichnung schematisch dargestellt sind, weiter erläutert.

Es zeigen
Fig. 1 zeigt ein Beispiel eines Abschnittes einer Bahn eines erfindungsgemäß ausgebildeten mehrlagigen Tissueprodukts,
Fig. 2 einen Teil einer Rolle eines mehrlagigen Tissueprodukts, welche dazu vorgesehen ist, durch Trennschnitte in aufgerollte Bahnen eines erfindungsgemäß ausgebildeten Tissueprodukts unterteilt zu werden,
Fig. 3 ein Beispiel einer Einrichtung, welche für die Herstellung eines erfindungsgemäß ausgebildeten bahnförmigen Tissueprodukts vorgesehen ist und
Fig. 4. eine Draufsicht auf einen Rändelnoppen mit hierauf befindlichen Vertiefungen.

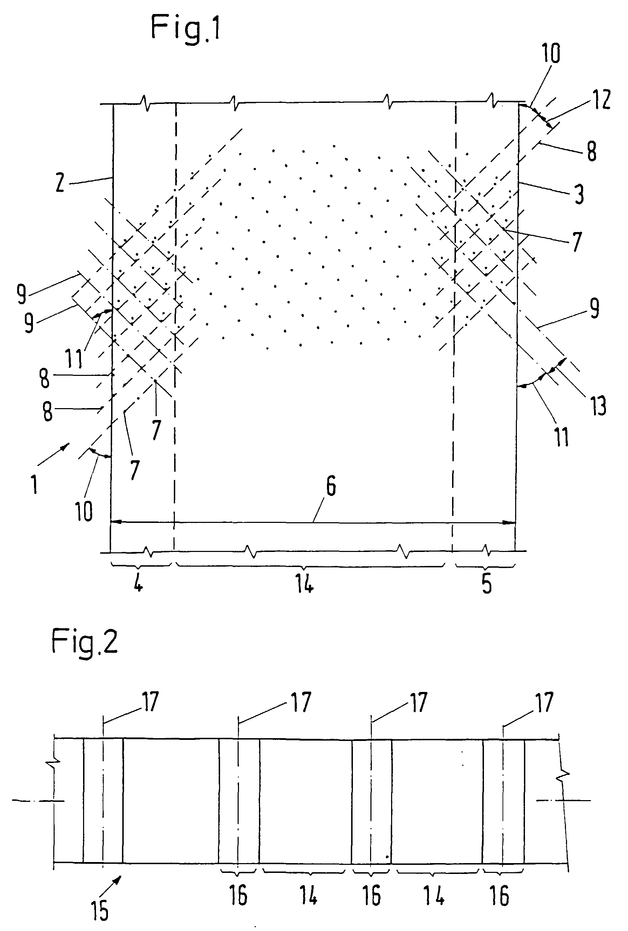

Die Papierbahn 1, von der in Fig. 1 ein Abschnitt dargestellt ist, besteht aus mehreren, z.B. zwei bis vier, Lagen, welche miteinander durch eine diesen Lagen gemeinsame Verbindungsprägung zusammengeheftet sind. Diese Verbindungsprägung ist in Form von beiderseits unmittelbar an die Ränder 2, 3 der mehrlagigen Bahn anschließenden Prägestreifen 4, 5 ausgeführt, welche einen Teil der Bahnbreite 6 einnehmen. Bei Bahnbreiten von etwa 90 bis 120 mm kann die Breite der Prägestreifen 4, 5 miteinander z.B. mit etwa 20 bis 60 mm gewählt werden. Bei größeren Bahnbreiten, von z.B. 120 bis 300 mm (z.B. Küchenrollen) und mehr, können die Prägestreifen 4, 5 auch breiter ausgeführt werden.

Im dargestellten Fall ist das in den Prägestreifen 4, 5 der die Lagen der Papierbahn 1 zusammenheftenden Verbindungsprägung vorliegende Prägemuster durch Noppen 7 gebildet, welche in einem annähernd rechteckigen oder parallelogrammförmigen Raster angeordnet sind, dessen Zeilen und Spalten annähernd gleich schräg zu den Rändern 2, 3 der Papierbahn 1 ausgerichtet sind. Es ist in Fig. 1 der Verlauf der Zeilen durch strichpunktierte Linien 9 und der Verlauf der Spalten durch strichlierte Linien 8 angedeutet; die mit 10 bezeichneten Winkel, welche die Linien 8 mit den Rändern 2, 3 einschließen, und die mit 11 bezeichneten Winkeln, welche die Linien 9 mit den Rändern 2, 3 einschließen, sind annähernd gleich. Annähernde Gleichheit dieser Winkel ist für einen geraden Lauf der Papierbahn beim Prägen günstig. Ein leicht schraubenlinienförmiger Verlauf der in Umfangsrichtung aufeinanderfolgenden Prägenoppen ist gleichfalls vorteilhaft, beispielsweise, um einen gleichmaßigeren Verschleiß der Gegenwalze zu erreichen.

Die einzelnen Lagen des bahnförmigen Tissueprodukts, welche durch die Verbindungsprägung in Form der beiden Prägestreifen 4 und 5 zusammengeheftet sind, können glatt oder je für sich mit einem im wesentlichen über die ganze Fläche verlaufenden Prägemuster versehen sein, wobei jedoch wenigstens die Außenlagen ein Lagen-Prägemuster aufweisen. Auch Kombinationen dahingehend, daß sowohl glatte als auch je für sich geprägte Lagen vorliegen, sind möglich. Im Interesse einer guten Griffigkeit und Volumigkeit und einer über die gesamte Bahnbreite annähernd gleichen Gesamtdicke des bahnförmigen Tissueprodukts sieht man vorteilhaft eine über die ganze Fläche verlaufende Prägung der einzelnen Lagen der Papierbahn 1 vor. Dies ist auch bei dem in Fig. 1 dargestellten Beispiel realisiert. Es sind dabei bei diesem Beispiel die Lagen-Prägemuster weitgehend gleich dem Prägemuster der Verbindungsprägung ausgeführt, was neben dem technischen Vorteil, daß die mehrlagige Papierbahn überall annähernd die gleichen Eigenschaften aufweist, auch den Vorteil hat, daß die Prägestreifen 4, 5 sich visuell kaum vom Prägemuster der zwischen diesen Prägestreifen liegenden Zone 14 abheben.

Wählt man z.B. die gegenseitigen Abstände 12, welche zwischen den Linien 8 vorliegen, und die gegenseitigen Abstände 13, die zwischen den Linien 9 vorliegen, verschieden groß, ist dies für einen gleichmäßigen Eingriff der Zähne der Prägewalzen in die miteinander zu vereinenden Papierlagen und damit für einen ruhigen Ablauf des Verbindungsprägevorganges von Vorteil. Bei nur geringen Unterschieden zwischen den Abständen 12 und 13, wobei sich ein annähernd quadratischer oder rhombischer Raster ergibt, in welchem die das Prägemuster der Verbindungsprägung bildenden Noppen angeordnet sind, ergibt dies eine weitgehende Ähnlichkeit des Aussehens der Prägemuster in der mittig gelegenen Zone 14 einerseits, wo nur eine Prägung einer Lage der Papierbahn zu sehen ist, und der in den Prägestreifen 4, 5 vorliegenden Prägung, andererseits, welche Prägung aus zwei übereinanderliegenden Prägungen gebildet ist, nämlich der auch in der mittigen Zone 14 vorliegenden Prägung und der Verbindungsprägung, mit der die einzelnen Lagen, welche miteinander die Papierbahn 1 bilden, zusammengeheftet sind.

Die Abmessungen der einzelnen Noppen, welche das Prägemuster bilden, wird vorteilhaft so gewählt, daß die Kantenlänge oder der Durchmesser dieser Noppen an der Papierbahn kleiner als 1,5 mm ist.

Bei der Herstellung des bahnförmigen Tissueprodukts geht man so vor, daß man mehrere geprägte und gegebenenfalls glatte Papierbahnen, deren Breite ein Mehrfaches der Breite der herzustellenden Papierbahn beträgt, gemeinsam durch einen axial unterteilten Prägespalt leitet, in welchem das Zusammenheften dieser Papierbahnen zu einer mehrlagigen Bahn durch eine Verbindungsprägung herbeigeführt wird. Die Verbindungsprägung bildet dabei mehrere in Abstand voneinander befindliche Prägestreifen. Die solcherart zusammengeheftete mehrlagige Papierbahn wird dann zu einer Rolle 15 aufgewickelt, von der in Fig. 2 ein Teil dargestellt ist. Bei dieser zu einer Rolle aufgewickelten breiten Papierbahn sind Prägestreifen 16 vorgesehen, welche durch Zonen 14 voneinander getrennt sind. Die Rolle 15 wird anschließend durch Schnitte, welche mit Sägen und Messern annähernd in der Mitte der Prägestreifen 16 geführt werden, wie durch strichpunktierte Linien 17 angedeutet ist, in eine Anzahl von Rollen mit geringerer axialer Länge unterteilt. Diese haben die für die Verwendung des Tissueprodukts vorgesehene Länge.

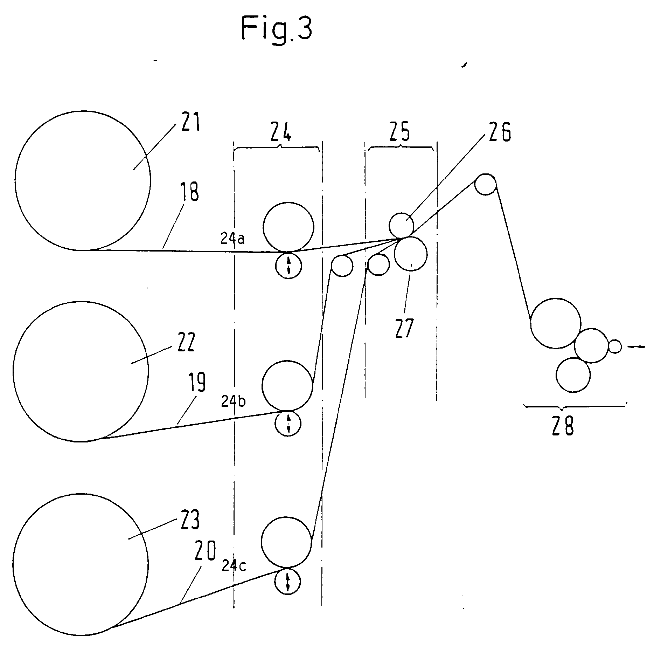

Bei der in Fig. 3 dargestellten Einrichtung werden drei Papierbahnen 18, 19, 20 je von sogenannten Mutterrollen 21, 22, 23 abgewickelt und durch Prägestationen 24a, 24c geführt, in welcher jede der genannten Papierbahnen mit einer Prägung versehen werden. Die erste Prägestation 24 b kann, aber muß nicht zu Prägungen von Innenlage 19 eingesetzt werden. Es kann dabei eine Prägung aller dieser Bahnen oder eines Teiles dieser Bahnen (Spot-Embossing) vorgenommen werden oder es kann die Innenbahn auch ungeprägt bleiben. In der ersten Prägestation 24 weisen Walze und Gegenwalze bevorzugt einen annähernd gleichen Durchmesser auf. Danach werden diese geprägten oder auch gegebenenfalls ungeprägten Papierbahnen 18, 19, 20 gemeinsam durch eine weitere Prägestation 25 geführt, wo diese Papierbahnen beim Passieren eines Prägespaltes, der zwischen mehreren schmalen Prägewalzen 26 und einer Gegenwalze 27 gebildet ist, hindurchlaufen, wobei das Zusammenheften der Papierbahnen 18, 19, 20 zu einer dreilagigen Papierbahn bewerkstelligt wird. Diese dreilagige Papierbahn wird dann einer Aufrollstation 28 zugeführt, wo diese Papierbahn, deren Breite ein Mehrfaches der Axiallänge der herzustellenden Papierrollen beträgt, zu Rollen gewickelt wird, wie sie in Fig. 2 dargestellt sind. Wie im Zusammenhang mit Fig. 2 erwähnt, wird diese breite Papierbahn dann entsprechend den strichpunktierten Linien - 17 in einzelne Rollen, die an Abmessungen dem beabsichtigten Verwendungszweck entsprechen, geteilt.

Im Zuge dieses Herstellungsvorganges kann man auch ergänzende Bearbeitungen bzw. Manipulationen vornehmen, wie z.B. das Ankleben der einzelnen zu Rollen 15 aufzurollenden Papierbahn an Wickelkernen 29 (hier nicht dagestellt), das Festlegen des in der Rolle 15 außenliegenden Endes mit Klebstoff, gewünschtenfalls das Bedrucken der Papierbahn, nachdem sie zu einer mehrlagigen Bahn durch Prägung zusammengeheftet worden ist, oder das Herumlegen von Papierschleifen um die fertiggestellten Rollen.

Um den Prägevorgang der Verbindungsprägung zu steuern, sieht man vorteilhaft einen regelbaren Andruck der Prägewalzen 26 an die Gegenwalze 27 vor. Hierfür kann man z.B. eine pneumatisch arbeitende Andruckeinrichtung verwenden.

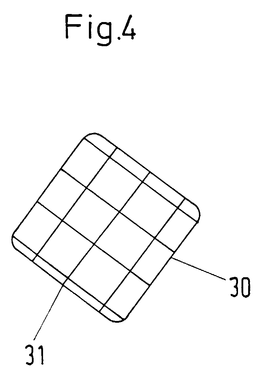

In Fig. 4 ist die Oberfläche eines Rändelnoppens 30 wiedergegeben, der wenigstens teilweise Vertiefungen 31 aufweist. Hier sind die Vertiefungen 31 in Längs- und Querrillen schachbrettartigartig jeweils in rechteckiger Form ausgestaltet.

## Patentansprüche

1. Mehrlagiges bahnförmiges Tissueprodukt aus wenigstens 2 Lagen, dessen Lagen miteinander durch eine allen Lagen gemeinsame Verbindungsprägung zusammengehalten sind, wobei die einzelnen Lagen mit einem im wesentlichen über die ganze Fläche verlaufenden Prägemuster versehen sind oder gegebenenfalls glatt sind, und wenigstens die Außenlagen ein Lagen-Prägemuster aufweisen, wobei die Lagen gleiche oder unterschiedliche Tissuequalität aufweisen, wobei die Verbindungsprägung in Form von beiderseits unmittelbar an die Ränder (2, 3) der mehrlagigen Bahn (1) anschließenden, einen Teil der Bahnbreite (6) einnehmenden Prägestreifen (4, 5) ausgeführt ist**, dadurch gekennzeichnet,** daß das Prägemuster der Verbindungsprägung, welche die Lagen zusammenheftet, und das bzw. die Prägemuster der einzelnen Lagen des Papiers durch Noppen (7) gebildet sind, welche in einem annähernd rechteckigen oder parallelogrammförmigen Raster angeordnet sind, dessen Zeilen (9) und Spalten (8) annähernd gleich schräg zu den Rändern (2, 3) der Bahn (1) ausgerichtet sind und wobei sämtliche Lagen des Tissueproduktes mit einem dem Lagen-Prägemuster wenigstens einer der Außenlagen gleichen oder visuell ähnlichen Verbindungsprägemuster zusammengeheftet sind.

2. Mehrlagiges bahnförmiges Tissueprodukt nach Anspruch 1, **dadurch gekennzeichnet,** daß die Noppen (7) in einem annähernd quadratischen oder rhombischen Raster angeordnet sind.

3. Mehrlagiges bahnförmiges Tissueprodukt nach Anspruch 1 oder 2, **dadurch gekennzeichnet,** daß die Noppen (7) an der Papierbahn (1) eine Kantenlänge oder einen Durchmesser von weniger als 1,5 mm haben.

4. Mehrlagiges bahnförmiges Tissueprodukt nach einem der vorhergehenden Ansprüche, **dadurch gekennzeichnet,** daß die Breite der beiden unmittelbar an die Ränder (2, 3) der mehrlagigen Bahn (1) anschließenden Prägestreifen (4, 5) der Verbindungsprägung zusammengenommen 10 bis 80 mm, vorzugsweise 20 bis 60 mm beträgt.

5. Mehrlagiges bahnförmiges Tissueprodukt nach einem der vorhergehenden Ansprüche, **dadurch gekennzeichnet,** daß die Tissuequalität eine Tissuepapierlage ist, die ausgewählt ist aus der Gruppe von Tissuequalitäten erhalten nach dem TAD-Verfahren, nach dem Schichtungsverfahren, dem Einsatz von Zellstoff in Form von Trockenstoft oder Pumpstoff, Altpapier, Sulfat- oder Sulfit-Zellstoff oder nach einer Kombination der vorgenannten Verfahren.

6. Mehrlagiges bahnförmiges Tissueprodukt nach einem der vorhergehenden Ansprüche, **dadurch gekennzeichnet,** daß die Tissuequalität eine Tissuepapierlage ist, die ausgewählt ist aus Qualitäten mit unterschiedlichen Flächengewichten im Bereich von 12 bis 40 g/m², vorzugsweise 14 bis 23 g/m², insbesondere mit solchen im Bereich von 15 bis 21 g/m².

7. Mehrlagiges bahnförmiges Tissueprodukt nach einem der vorhergehenden Ansprüche, **dadurch gekennzeichnet,** daß die Tissuequalität wenigstens einer der Innenlagen eine größere, gleiche oder geringere Festigkeit aufweist als die Tissuequalität der Außenlagen.

8. Mehrlagiges bahnförmiges Tissueprodukt nach einem der vorangehenden Ansprüche, **dadurch gekennzeichnet,** daß wenigstens eine der Lagen, insbesondere der Innenlagen wenigstens 50 Gew.-%, vorzugsweise wenigstens 80 Gew.-%, insbesondere bis zu 100 Gew.-% Recycling-Papier oder Altpapier enthält.

9. Mehrlagiges bahnförmiges Tissueprodukt nach einem der vorangehenden Ansprüche, **dadurch gekennzeichnet,** daß zusätzlicher Zusammenhalt der Lagen über eine Verbindungsprägung (4, 5) durch wenigstens eine auf den Oberflächen der Noppen des Rändelrads vorhandene Vertiefung (31), die vorzugsweise rund oder eckig ausgestaltet ist, erfolgt.

10. Mehrlagiges bahnförmiges Tissueprodukt nach einem der vorhergehenden Ansprüche, **dadurch gekennzeichnet,** daß der zusätzliche Zusammenhalt der Lagen über eine auf wenigstens einen Teil der Bahn aufgebrachte Verleimung, vorzugsweise im Bereich der Breiträndelung, erfolgt.

11. Verfahren zur Herstellung eines mehrlagigen bahnförmigen Tissueprodukts nach einem der vorhergehenden Ansprüche, wobei mehrere, z.B. zwei oder drei, mit einem Noppen-Prägemuster versehene Papierbahnen (18, 19, 20), deren Breite ein Mehrfaches der Breite der herzustellenden Papierbahn (1) beträgt, gemeinsam durch einen axial unterteilten Prägespalt geleitet werden, der zwischen mindestens drei, axial fluchtend im Abstand voneinander angeordneten stählernen Noppen-Prägewalzen (26) und einer oder mehreren diesen Noppen-Prägewalzen zugeordneten Gegenwalze(n) mit einer Oberfläche vorzugsweise aus Stahl, Gummi, Papier oder Kunststoff (27) gebildet ist, **dadurch gekennzeichnet,** daß die so gebildete mehrlagige Papierbahn nach dem im Prägespalt erfolgten Zusammenheften der Lagen durch Schnitte in mehrere schmälere Papierbahnen geteilt wird, welche Schnitte je annähernd in der Mitte der bei diesem Zusammenheften gebildeten streifenförmigen Prägemuster geführt werden, wobei das Teilen in mehrere schmälere Papierbahnen, welche die für die Verwendung des Tissueprodukts gewünschte Breite haben, nach einem auf das Zusammenheften erfolgten Aufrollen der durch den Prägespalt gelaufenen Papierbahn vorgenommen wird.

12. Verfahren nach Anspruch 11, **dadurch gekennzeichnet,** daß daß beim Zusammenheften der Papierbahnen je 10 bis 80 mm, vorzugsweise 20 mm bis 60 mm breite streifenförmige Prägemuster gebildet werden.

13. Verfahren nach Anspruch 11 oder 12, **dadurch gekennzeichnet,** daß die Noppen der Noppen-Prägewalze (26) auf wenigstens einem Teil ihrer Oberfläche (30) Vertiefungen (31) aufweisen, die eine weitere Verbindungsprägung erzeugen.

14. Verfahren nach Anspruch 13, **dadurch gekennzeichnet,** daß die weitere Verbindungsprägung durch Vertiefungen (31) in den Noppen auf wenigstens einem Teil ihrer Oberfläche (30) in Form von einer Vielzahl von Mehrecken oder Kreisen, vorzugsweise Rechtecken oder Parallelogrammen erfolgt.

15. Einrichtung zur Herstellung von Tissueprodukten nach Ansprüchen 1 bis 10, enthaltend Mittel zum Abwickeln von Papierbahnen (18, 19, 20) von Mutterrollen (21, 22, 23) und Führung der Papierbahnen, erste, wenigstens zwei Prägestationen (24a, 24c), die zur Lagenprägung der Außenlagen (18, 20) dienen, wobei mindestens eine der zwei Prägestationen eine Noppenwalze umfaßt, eine weitere Prägestation (25), die einen Prägespalt bildet, bei dem mehrere schmale Prägewalzen (26) einer Gegenwalze (27) zugeordnet sind, gegebenenfalls ein Glättwerk, gegebenenfalls ein Druckwerk sowie eine Aufrollstation (28), **dadurch gekennzeichnet,** daß die weitere Prägestation (25) eine Rändelstation enthält, bei der eine Rändelradwalze oder eine Vielzahl von Rändelrädern wenigstens einer Gegenwalze mit Stahloberfläche zugeordnet ist und daß die weitere Prägewalze (26) eine Noppenprägewalze aufweist.

16. Einrichtung nach Anspruch 15, **dadurch gekennzeichnet,** daß die erste Prägestation (24) wenigstens ein Walzenpaar enthält, bei der eine Walze mit Stahloberfläche einer Gegenwalze mit Gummioberfläche, Kunststoffoberfläche, Papieroberfläche oder einer Stahloberfläche zugeordnet ist.

17. Einrichtung nachAnspruch 15 bis 16**, dadurch gekennzeichnet,** daß die Rändelradwalze eine Noppenprägewalze ist und Rändeiräder aufweist, die eine Rändelung über 10 mm bis 80 mm, vorzugsweise 20 mm bis 60 mm erzeugen.

18. Einrichtung nach Anspruch 15 bis 17, **dadurch gekennzeichnet,** daß die Noppen der Rändelräder auf wenigstens einem Teil ihrer Oberfläche Vertiefungen aufweisen.

19. Einrichtung nach Anspruch 15 bis 18, **dadurch gekennzeichnet,** daß die Vertiefungen als eine Vielzahl von Mehrecken oder Kreisen, vorzugsweise Rechtecken oder Parallelogrammen ausgestaltet sind.

20. Einrichtung nach Anspruch 15 bis 19, **dadurch gekennzeichnet,** daß die Papierbahn einmal durch den Spalt, mehrere Spalte hintereinander, eines Walzenpaares geführt wird, bei dem zuerst eine Walze mit einer Stahloberfläche einer Gegenwalze mit einer Kunststoffoberfläche und dann spiegelbildlich eine Walze mit einer Kunststoffoberfläche einer Gegenwalze mit einer Stahloberfläche zugeordnet ist.

## Claims

1. Multi-ply web-like tissue product consisting of at least two plies, of which the plies are held together by a connecting embossment common to all plies, wherein the individual plies are provided with an embossed pattern extending substantially over the entire area or are optionally smooth, and at least the outer plies have a ply embossed pattern, the plies being of identical or different tissue quality, wherein the connecting embossment is designed in the form of embossed stripes (4, 5) directly adjoining the edges (2, 3) of the multi-ply web (1) on both sides and occupying a portion of the web width (6), characterised in that the embossed pattern of the connecting embossment joining the plies together and the embossed pattern(s) of the individual plies of the paper are formed by bumps (7) arranged in an approximately rectangular or parallelogram-shaped grid of which the rows (9) and columns (8) are orientated approximately identically obliquely to the edges (2, 3) of the web (1) and wherein all plies of the tissue product are joined together by a connecting embossed pattern identical or visually similar to the ply embossed pattern of at least one of the outer plies.

2. Multi-ply web-like tissue product according to claim 1, characterised in that the bumps (7) are arranged in an approximately square or rhombic grid.

3. Multi-ply web-like tissue product according to claim 1 or 2, characterised in that the bumps (7) on the paper web (1) have an edge length or a diameter of less than 1.5 mm.

4. Multi-ply web-like tissue product according to one of the preceding claims, characterised in that the width of the two embossed stripes (4, 5) of the connecting embossment directly adjoining the edges (2, 3) of the multi-ply web (1) taken together is 10 to 80 mm, preferably 20 to 60 mm.

5. Multi-ply web-like tissue product according to one of the preceding claims, characterised in that the tissue quality is a tissue paper ply selected from the group of tissue qualities obtained by the TAD process, by the layering process, the use of chemical pulp in the form of drying agent or pumping agent, waste paper, sulphate or sulphite chemical pulp or by a combination of the aforementioned processes.

6. Multi-ply web-like tissue product according to one of the preceding claims, characterised in that the tissue quality is a tissue paper ply selected from qualities with different grammages in the range of 12 to 40 g/m², preferably 14 to 23 g/m², in particular with grammages in the range of 15 to 21 g/m².

7. Multi-ply web-like tissue product according to one of the preceding claims, characterised in that the tissue quality of at least one of the inner plies has a greater, identical or lower strength than the tissue quality of the outer plies.

8. Multi-ply web-like tissue product according to one of the preceding claims, characterised in that at least one of the plies, in particular the inner plies, contains at least 50% by weight, preferably at least 80% by weight, in particular up to 100% by weight of recycled paper or waste paper.

9. Multi-ply web-like tissue product according to one of the preceding claims, characterised in that additional cohesion of the plies via a connecting embossment (4, 5) is brought about by at least one depression (31) which is provided on the surfaces of the bumps of the knurling wheel and is preferably round or angular in design.

10. Multi-ply web-like tissue product according to one of the preceding claims, characterised in that the additional cohesion of the plies is brought about by glue applied to at least a portion of the web, preferably in the region of the wide knurling.

11. Process for producing a multi-ply web-like tissue product according to one of the preceding claims, wherein a plurality of, for example two or three, paper webs (18, 19, 20), which are provided with an embossed pattern of bumps and of which the width is a multiple of the width of the paper web (1) to be produced, are conveyed together through an axially divided embossing nip formed between at least three bump-embossing rolls (26) made of steel and spaced apart in axial alignment and one or more opposing roll(s) associated with these bump-embossing rolls and having a surface preferably of steel, rubber, paper or plastic (27), characterised in that the multi-ply paper web formed in this way is divided into a plurality of narrower paper webs by cuts after the plies have been joined together in the embossing nip, which cuts are each guided approximately in the centre of the stripe-form embossed pattern formed during this joining, wherein the division into a plurality of narrower paper webs having the width desired for the use of the tissue product is carried out after reeling, following joining, of the paper web which has passed through the embossing nip.

12. Process according to claim 11, characterised in that stripe-form embossed patterns which are each 10 to 80 mm, preferably 20 mm to 60 mm wide, are formed during joining together of the paper webs.

13. Process according to claim 11 or 12, characterised in that the bumps of the bump-embossing roll (26) have depressions (31) over at least a portion of their surface (30), which produce a further connecting embossment.

14. Process according to claim 13, characterised in that the further connecting embossment is brought about by depressions (31) in the bumps over at least a portion of their surface (30) in the form of a plurality of polygons or circles, preferably rectangles or parallelograms.

15. Assembly for producing tissue products according to claims 1 to 10, containing means for unwinding paper webs (18, 19, 20) from master rolls (21, 22, 23) and guiding the paper webs, at least two first embossing stations (24a, 24c) which serve for ply embossing of the outer plies (18, 20), at least one of the two embossing stations comprising a bump roll, a further embossing station (25) forming an embossing nip in which a plurality of narrow embossing rolls (26) are associated with an opposing roll (27), optionally glazing rolls, optionally a printing unit and a reeling station (28), characterised in that the further embossing station (25) contains a knurling station in which a knurling wheel roll or a plurality of knurling wheels is associated with at least one opposing roll with a steel surface and in that the further embossing roll (26) has a bump-embossing roll.

16. Assembly according to claim 15, characterised in that the first embossing station (24) contains at least one pair of rolls in which a roll with a steel surface is associated with an opposing roll with a rubber surface, plastic surface, paper surface or a steel surface.

17. Assembly according to claim 15 or 16, characterised in that the knurling wheel roll is a bump-embossing roll and has knurling wheels which produce knurling over 10 mm to 80 mm, preferably 20 mm to 60 mm.

18. Assembly according to claims 15 to 17, characterised in that the bumps of the knurling wheels have depressions over at least a portion of their surface.

19. Assembly according to claims 15 to 18, characterised in that the depressions are designed as a plurality of polygons or circles, preferably rectangles or parallelograms.

20. Assembly according to claims 15 to 19, characterised in that the paper web is guided once through the nip, a plurality of nips in succession, of a pair of rolls, in which a roll with a steel surface is first associated with an opposing roll with a plastic surface, and a roll with a plastic surface is then associated with an opposing roll with a steel surface in mirror image.

## Revendications

1. Produit en tissu ouaté multicouche en forme de bande en au moins 2 couches dont les couches sont maintenues ensemble par un gaufrage de liaison commun à toutes les couches, les couches individuelles étant munies d'un dessin de gaufrage s'étendant sensiblement sur toute la surface ou étant le cas échéant lisses et au moins les couches extérieures présentant un dessin de gaufrage de couche, les couches présentant une qualité de tissu ouaté identique ou différente, le gaufrage de liaison étant réalisé sous forme de bandes de gaufrage (4, 5) se raccordant des deux côtés directement aux bords (2, 3) de la bande (1) multicouche en prenant une partie de la largeur (6) de bande de la bande (1) multicouche,
caractérisé en ce que le dessin de gaufrage du gaufrage de liaison, qui attache les couches ensemble, et le ou respectivement les dessins de gaufrage des couches individuelles du papier sont formés par des nopes (7) qui sont disposées selon une trame, approximativement rectangulaire ou en forme de parallélogramme, dont les lignes (8) et les colonnes (9) sont orientées selon approximativement la même inclinaison par rapport aux bords (2, 3) de la bande (1), toutes les couches du produit en tissu ouaté étant attachées ensemble par un dessin de gaufrage de liaison identique ou visuellement semblable au dessin de gaufrage de bande d'au moins une des couches extérieures.

2. Produit en tissu ouaté multicouche en forme de bande selon la revendication 1,
caractérisé en ce que les nopes (7) sont disposées selon une trame approximativement quadratique ou rhomboïdale.

3. Produit en tissu ouaté multicouche en forme de bande selon la revendication 1 ou 2,
caractérisé en ce que les nopes (7) ont, sur la bande (1) de papier, une longueur d'arête ou un diamètre inférieur à 1,5 mm.

4. Produit en tissu ouaté multicouche en forme de bande selon l'une des revendications précédentes,
caractérisé en ce que la largeur des deux bandes de gaufrage (4, 5) de gaufrage de liaison se raccordant directement aux bords (2, 3) de la bande (1) multicouche est égale au total à 10 à 80 mm, de préférence à 20 à 60 mm.

5. Produit en tissu ouaté multicouche en forme de bande selon l'une des revendications précédentes,
caractérisé en ce que la qualité de tissu ouaté est une couche de papier de tissu ouaté qui est choisie dans le groupe de qualités de tissus ouatés obtenus par le procédé TAD, par le procédé d'empilage, l'utilisation de cellulose sous forme de pâte sèche ou de pâte liquide, de cellulose sulfate ou sulfite, ou par une combinaison des procédés précités.

6. Produit en tissu ouaté multicouche en forme de bande selon l'une des revendications précédentes,
caractérisé en ce que la qualité de tissu ouaté est une couche de papier de tissu ouaté qui est choisie parmi des qualités à grammages différents dans la plage de 12 à 40g/m², de préférence de 14 à 23g/m², en particulier ceux dans la plage de 15 à 21g/m².

7. Produit en tissu ouaté multicouche en forme de bande selon l'une des revendications précédentes,
caractérisé en ce que la qualité de tissu ouaté d'au moins l'une des couches intérieures présente une solidité supérieure, égale ou inférieure à la qualité de tissu ouaté des couches extérieures.

8. Produit en tissu ouaté multicouche en forme de bande selon l'une des revendications précédentes,
caractérisé en ce qu'au moins l'une des couches, en particulier des couches intérieures, contient au moins 50% en poids, de préférence au moins 80% en poids, en particulier jusqu'à 100% en poids de papier de recyclage ou de vieux papier.

9. Produit en tissu ouaté multicouche en forme de bande selon l'une des revendications précédentes,
caractérisé en ce qu'un maintien additionnel des couches résulte d'un gaufrage de liaison (4, 5) par au moins une empreinte (31), qui est de préférence conformée ronde ou polygonale, disponible sur les surfaces des nopes de la molette.

10. Produit en tissu ouaté multicouche en forme de bande selon l'une des revendications précédentes,
caractérisé en ce que le maintien additionnel des couches résulte d'un collage rapporté sur au moins une partie de la bande, de préférence dans la zone du moletage au large.

11. Procédé de fabrication d'un produit en tissu ouaté multicouche en forme de bande selon l'une des revendications précédentes, plusieurs bandes (18, 19, 20) de papier, par exemple deux ou trois, munies d'un dessin de gaufrage à nopes, dont la largeur est un multiple de la largeur de la bande (1) de papier à fabriquer, étant guidées ensemble à travers une fente de gaufrage divisée axialement, qui est formée entre au moins trois cylindres de gaufrage à nopes (26) en acier disposés alignés à écartement les uns des autres et un ou plusieurs contre-cylindres, adjoints à ces cylindres de gaufrage à nopes, avec une surface de préférence en acier, en caoutchouc, en papier ou en matière synthétique (27),
caractérisé en ce que la bande de papier multicouche ainsi formée, après l'assemblage des couches produit dans la fente de gaufrage, est divisée par des coupes en plusieurs bandes de papier plus étroites, lesquelles coupes sont chacune effectuées approximativement au milieu de la trame de gaufrage en forme de bande formée par cet assemblage, la division en plusieurs bandes de papier plus étroites, qui ont la largeur souhaitée pour l'utilisation du produit en tissu ouaté, étant effectuée après un enroulement produit sur l'assemblage de la bande de papier ayant traversé la fente de gaufrage.

12. Procédé selon la revendication 11,
caractérisé en ce que, lors de l'assemblage des bandes de papier, sont formés des dessins de gaufrage en forme de bandes chacune d'une largeur de 10 à 80 mm, de préférence de 20 mm à 60 mm.

13. Procédé selon la revendication 11 ou 12,
caractérisé en ce que les nopes du cylindre de gaufrage à nopes (26) présentent, sur au moins une partie de leur surface (30), des empreintes (31) qui engendrent un gaufrage de liaison supplémentaire.

14. Procédé selon la revendication 13,
caractérisé en ce que le gaufrage de liaison supplémentaire par des empreintes (31) dans les nopes se produit dans au moins une partie de leur surface (30) sous forme d'une pluralité de polygones ou de cercles, de préférence de rectangles ou de parallélogrammes.

15. Installation pour la fabrication de produits en tissu ouaté selon les revendications 1 à 10, contenant des moyens pour dérouler des bandes de papier (18, 19, 20) de rouleaux-mères (21, 22, 23) et guider les bandes de papier, des premières, au moins deux, stations de gaufrage (24a, 24c) qui servent au gaufrage de couches des couches extérieures (18, 20), au moins l'une des deux stations de gaufrage comprenant un cylindre à nopes, une station de gaufrage (25) supplémentaire, qui forme une fente de gaufrage, dans laquelle un contre-cylindre (27) est adjoint à plusieurs cylindres de gaufrage (26) étroits, le cas échéant une lisseuse, le cas échéant un élément d'impression, ainsi qu'une station d'enroulage (28),
caractérisée en ce que la station de gaufrage (25) supplémentaire contient une station de moletage dans laquelle un cylindre à roues moletées ou une pluralité de roues moletées sont adjoints à au moins un contre-cylindre à surface en acier et en ce que le cylindre de gaufrage (26) supplémentaire présente un cylindre de gaufrage à nopes.

16. Installation selon la revendication 15,
caractérisée en ce que la première station de gaufrage (24) contient au moins une paire de cylindres dans laquelle un contre-cylindre à surface en caoutchouc, à surface en matière synthétique, à surface en papier, ou une surface en acier est adjoint à un cylindre à surface en acier.

17. Installation selon la revendication 15 ou 16,
caractérisée en ce que le cylindre à roues moletées est un cylindre de gaufrage à nopes et présente des roues moletées qui engendrent un moletage sur 10 mm à 80 mm, de préférence 20 mm à 60 mm.

18. Installation selon l'une des revendications 15 à 17,
caractérisée en ce que les nopes des roues moletées présentent des empreintes sur au moins une partie de leur surface.

19. Installation selon l'une des revendication 15 à 18,
caractérisée en ce que les empreintes sont conformées selon une pluralité de polygones ou de cercles, de préférence des rectangles ou des parallélogrammes.

20. Installation selon l'une des revendications 15 à 19,
caractérisée en ce que la bande de papier est guidée une fois à travers la fente, plusieurs fentes les unes après les autres, d'une paire de cylindres dans laquelle d'abord un contre-cylindre à surface en matière synthétique est adjoint à un cylindre à surface en acier et ensuite, inversement, un contre-cylindre à surface en acier est adjoint à un cylindre à surface en matière synthétique.
